(19) Europäisches Patentamt
European Patent Office
Office européen des brevets

(11) EP 0 562 059 B1

(12) **EUROPEAN PATENT SPECIFICATION**

(45) Date of publication and mention
of the grant of the patent:
**11.12.1996 Bulletin 1996/50**

(51) Int Cl.[6]: **C01F 7/02**, C01F 7/04,
C01F 7/44, B01D 53/68

(21) Application number: **92917043.9**

(22) Date of filing: **07.08.1992**

(86) International application number:
**PCT/AU92/00416**

(87) International publication number:
**WO 93/02772 (18.02.1993 Gazette 1993/05)**

(54) **SCRUBBING OF GASEOUS FLUORIDES FROM PROCESS EXHAUSTS**

AUSWASCHEN VON GASFÖRMIGEN FLUORIDEN AUS ABGASEN

ELIMINATION DE FLUORURES GAZEUX DES GAZ BRULES

(84) Designated Contracting States:
**DE ES FR GB NL SE**

(30) Priority: **07.08.1991 AU 7651/91**

(43) Date of publication of application:
**29.09.1993 Bulletin 1993/39**

(73) Proprietor: **COMALCO ALUMINIUM, LTD.**
**Melbourne Victoria 3000 (AU)**

(72) Inventors:
• **WELLWOOD, Grant, Ashley**
**Millpark, VIC 3082 (AU)**
• **SMITH, Thomas, Keith**
**The Gap, QLD 4061 (AU)**

(74) Representative: **Hallybone, Huw George et al**
**CARPMAELS AND RANSFORD**
**43 Bloomsbury Square**
**London WC1A 2RA (GB)**

(56) References cited:
EP-A- 0 015 196     EP-A- 0 054 976
EP-A- 0 118 031     EP-A- 0 454 948
AU-A- 4 472 472     AU-A- 5 976 269
CH-A- 336 808       DD-A- 242 605
DD-A- 248 108       DD-A- 258 909
FR-A- 2 279 443     FR-A- 2 534 831
GB-A- 1 020 790     GB-A- 1 112 466
GB-A- 1 295 133     GB-A- 1 309 611
GB-A- 1 371 777     US-A- 3 406 125
US-A- 3 701 718     US-A- 3 827 955
US-A- 3 839 536     US-A- 3 907 971
US-A- 4 120 942     US-A- 4 444 899
US-A- 4 534 957     US-A- 5 063 035

• DERWENT ABSTRACT Accession No. 89,747
E/42, Class E33, L02, SU,A, 528,733 (AS SIBE
CATALYST), 23 December 1981 (12.12.81), entire
document.

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to improvements of the scrubbing ot gaseous fluorides from process exhaust gases.

The production of aluminium by electrolytic refining results in the formation of gaseous fluorides in the exhaust gases from the electrolytic cell, the most notable fluoride being hydrogen fluoride.

Dry scrubbing is the current state-of-the-art technique for treating exhaust gases containing HF. The process involves chemisorption of the contained HF onto alumina particles in a gas/solid contactor. After initial contact, the exposed alumina particles are collected in a baghouse, together with any entrained particles in the raw exhaust gas. The recovered solid (secondary alumina) is then either recycled to the gas/solid contactor or fed to the electrolytic cell.

Since the introduction of alumina based dry scrubbing systems, there has been a steady trend toward higher fluoride loadings. This increase, attributed mainly to changes in bath chemistry, has pushed the conventional dry scrubbing system to its capacity limits. The situation is compounded by pressure from regulatory bodies to reduce both mass and concentration based fluoride emissions.

In order to satisfy current and future demands, the scrubbing capacity of the system must be increased. One strategy is to enhance the practical absorptive capacity of the alumina through improved gas/solid contacting. Current systems only realize around half the theoretical HF loading, a discrepancy thought to relate in part to the quality of contact between the gas and the particle. Strategies for improving this aspect of the process have been proposed and are presently under review. Another more radical approach involves modifying the composition of the scrubbing medium.

FR-A-2279443 describes a method of scrubbing waste gases containing a fluoride component. The method comprises cooling the waste gases to 150-400°C, introducing a fluoride-reactive powder into the cooled gas, and passing the powder-containing waste gas through a filter on which the fluorine-reactive powder is deposited. The fluorine-reactive powder can be calcium hydroxide, calcium oxide, calcium carbonate or aluminium hydroxide.

GB-A-1371777 describes another method of scrubbing waste gases containing a fluoride component. The method comprises contacting the waste gas with partially dehydrated Bayer aluminium hydroxide to obtain aluminium fluoride. The partially dehydrated aluminium hydroxide has a residual water content of from 2% to 15% by weight and a specific surface area of at least 250 $m^2$/g BET.

The object of the present invention is to provide an improved method and system for dry scrubbing process gases containing fluorides in which the fluoride removing capacity of the system is significantly improved over the state of the art systems.

The invention therefore provides a method of dry scrubbing process exhaust gases containing fluorides, comprising the steps of bringing the fluoride containing gas into contact with particles of surface rehydrated alumina to cause the fluoride in the gas to react chemically with aluminium hydroxide present on the surfaces of said particles to form fluoride containing particles, and collecting the fluoride containing particles.

The invention also provides a system for dry scrubbing process exhaust gases containing fluorides, comprising: means to carry out surface rehydration of alumina particles; means to convey the fluoride containing gases and the surface rehydrated alumina particles to a reaction zone; means to contact said gases and said particles to cause a chemical reaction between the particles and the fluoride component of the gas to form particles containing a stable fluoride; and means to collect said particles containing the stable fluoride for subsequent use.

When contacted, aluminium trihydrate and HF react exothermically according to the equation:

$$A\ell(OH)_3 + 3HF(g) \rightarrow A\ell F_3 + 3H_2O(g).$$

Aluminium trihydrate, rehydrated alumina and/or partially calcined gibbsite are of course preferred for the scrubbing of aluminium smelting cell exhaust gases since the resulting aluminium fluoride product may be utilized in the smelting process and the aluminium trihydrate product is readily available as a precursor of the alumina product required for aluminium smelting by the simple treatment of smelter grade alumina. Thus, the use of aluminium trihydrate, rehydrated alumina and/or partially calcined gibbsite instead of or in combination with alumina offers obvious economic advantages.

Aluminium trihydrate is available in different crystalline forms, including gibbsite and bayerite. It is believed that the bayerite crystalline phase of aluminium trihydrate is likely to be more reactive to HF than untreated gibbsite, although both crystalline forms offer superior HF reactive capacities than smelter grade alumina (SGA).

The bayerite phase of aluminium trihydrate is able to be engineered from the rehydration of SGA, and as mentioned above, it is likely that the bayerite phases present in rehydrated SGA are likely to be more reactive towards HF than untreated gibbsite. Rehydration of SGA causes the formation of bayerite crystals on the surface of the SGA particles, and accordingly the extent of the conversion of the SGA to surface bayerite can be contrblled by controlling the rehydration process. Thus, rehydrated SGA consists of a surface activated (with respect to HF reactivity) with bayerite, supported on an alumina substrate, which significantly reduces the risk of unreacted trihydrate reaching the electrolytic cell.

Bayerite crystals are smaller than gibbsite crystals and have a somatoidal structure, which results in a higher proportion of reactive edge sites. In addition, the structural stacking sequence of bayerite is more conducive to attachment by HF molecules. Thus, rehydrated alumina provides a particularly attractive way of presenting bayerite crystals to HF-containing gases for the purpose of removing those gases from an exhaust stream.

Rehydration of smelter grade alumina (SGA) from Queensland Alumina Limited at about 0.5 to 5 wt% appears to favour bayerite formation at around 2.3 wt% levels. Assuming all the bayerite reacts, the HF loading capacity of rehydrated SGA would be around 27.7 mg HF/gm, which compares favourably with the 10 mg HF/gm loading capacity commonly achieved with SGA under similar conditions. The HF capacity of a composite rehydrated SGA/SGA blend is given by the equation:

$$\text{HF capacity (mg HF/gm solid)} = 10 + 0.18\,x$$

where x equals wt% rehydrated SGA.

The main limitation on the uses of the gibbsite phase of aluminium trihydrate relate to the molecular packing sequence of gibbsite, on which the closely packed hydroxyls of the gibbsite crystals do not offer reactive sites. Because the opportunities for initial reaction are limited, the structure does not break down and there are limited opportunities for further reaction with newly exposed surfaces. This hypothesis is consistent with the empirical observations. Although higher specific surface areas could be achieved by grinding the gibbsite prior to exposure to HF, this is not considered a practical proposition and is unlikely to make an significant improvement.

In preferred forms of the method and system defined above, the rehydrated alumina particles may be mixed with the alumina feed particles used in the state of the art system to achieve a desired gas scrubbing capacity in that system. This option is well suited to plants with existing alumina based dry scrubbing systems.

Alternatively, the particles used in the method or system may be substantially exclusively rehydrated alumina to achieve maximum scrubbing capacity. This option has maximum viability when a major upgrade of an existing scrubbing installation or a new scrubbing system is being considered.

Implementation of the improved method and system embodying the invention may be achieved using known technology to achieve the necessary contact between the fluoride containing gases and the aluminium trihydrate, rehydrated alumina or partially calcined gibbsite particles. The system and method may operate as a continuous process in which the fluoride containing gases are brought into contact with a continuously supplied stream of rehydrated alumina particles, in a circulating fluidised bed. Alternatively, the system may be operated on a batch process basis, with the batch being as small as an element for a face mask, or as large as a static fluidised bed.

In order that the invention may be more readily understood, presently preferred embodiments will now be described with reference to the accompanying drawings in which:

Figure 1 is a schematic block diagram showing partial substitution of rehydrated alumina;
Figure 1A is a schematic block diagram showing a modified system for partially substituting rehydrated alumina for alumina;
Figure 2 is a similar schematic block diagram illustrating full substitution of particles of surface rehydrated alumina;
Figure 3 is a graph comparing the fluoride capacities of alumina with aluminium trihydrate;
Figure 4 is a graph of fluoride capacity against the amount of aluminium trihydrate in the scrubbing medium;
Figure 5 is a more complete block diagram illustrating typical components of a continuous gas scrubbing system, and
Figure 6 is a block diagram illustrating a batch scrubbing system.

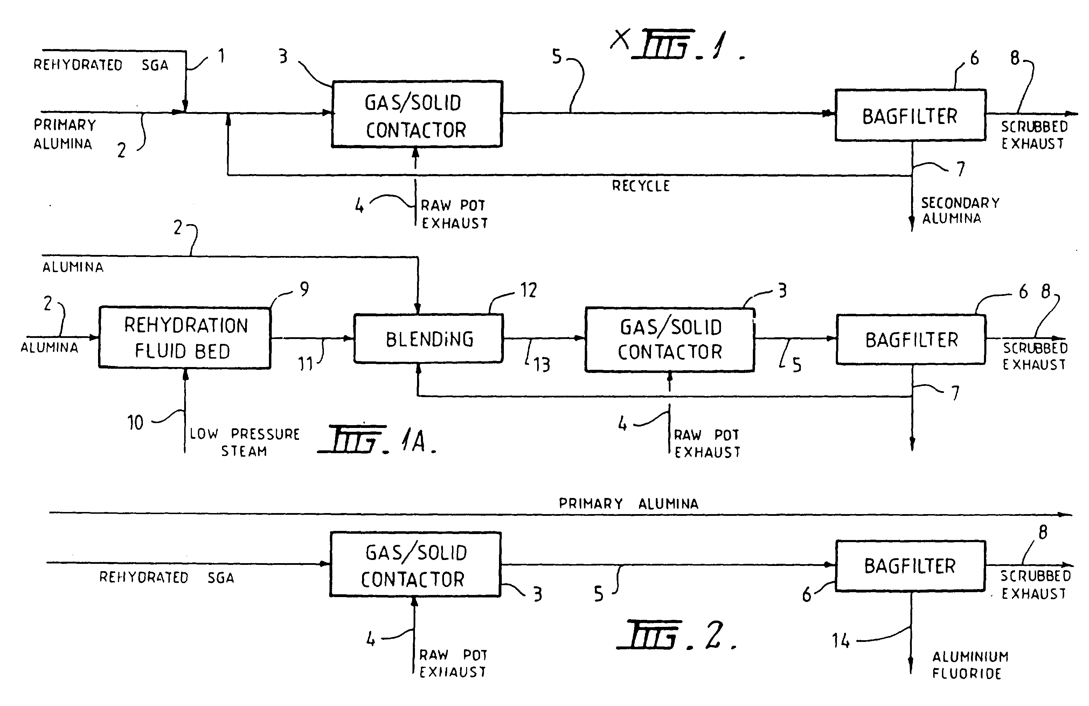

Referring firstly to Figure 1 of the drawings, a partial substitution system introduces a stream 1 of of surface rehydrated alumina into the primary alumina stream 2 being fed to a suitable gas/solid contactor 3 to which the raw exhaust gases 4 from an electrolytic cell (not shown) are fed. The gas/solid stream 5 from the contactor 3 passes through a bag filter 6 which separates the secondary alumina 6 and aluminium fluoride 7 and exhausts the scrubbed gases 8 from the system.

In Figure 1A of the drawings, the aluminum trihydrate component is supplied in the form of particles of a rehydrated smelter grade alumina (SGA) which has a bayerite crystal structure on its surface. In the embodiment shown, primary alumina 2, or SGA, is fed to a rehydrating fluidised bed 9 to which low pressure steam 10 is fed from a suitable source. The resultant rehydrated SGA 11 is fed to a known blender 12 together with a primary alumina source 2 following which the blended rehydrated SGA and primary SGA 13 is fed to a gas\solid contactor 3 to achieve a similar result to the system of Fig. 1.

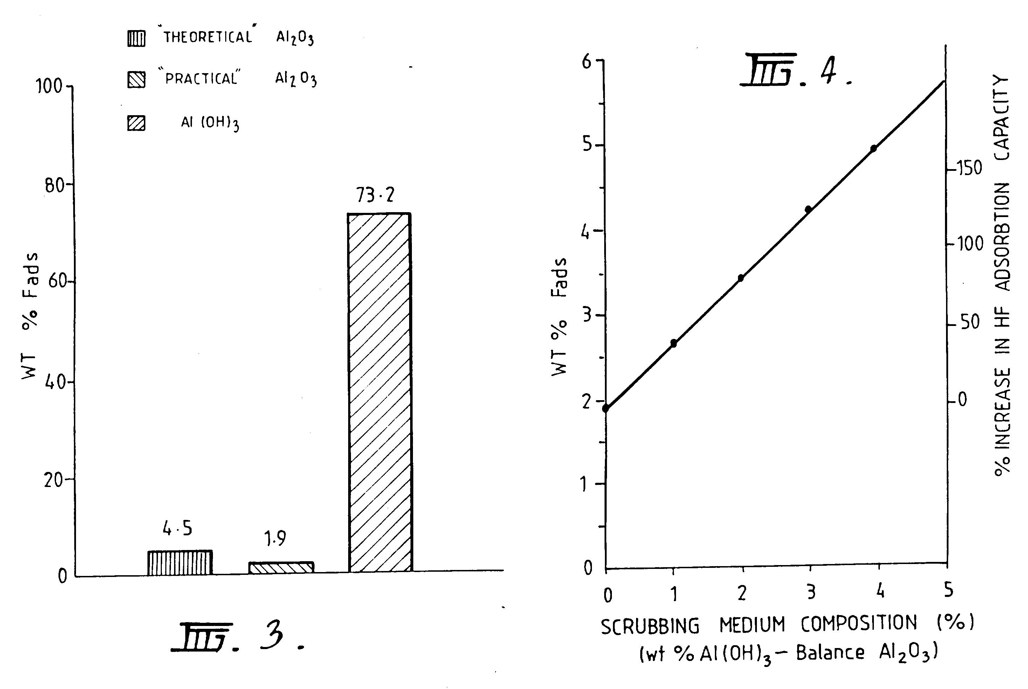

The full substitution system schematically shown in Figure 2 of the drawings is essentially the same as the system of Figure 1 except that only rehydrated SGA particles are fed to the gas/solid contactor 3 and only aluminium fluoride 14 is collected from the bag filter.

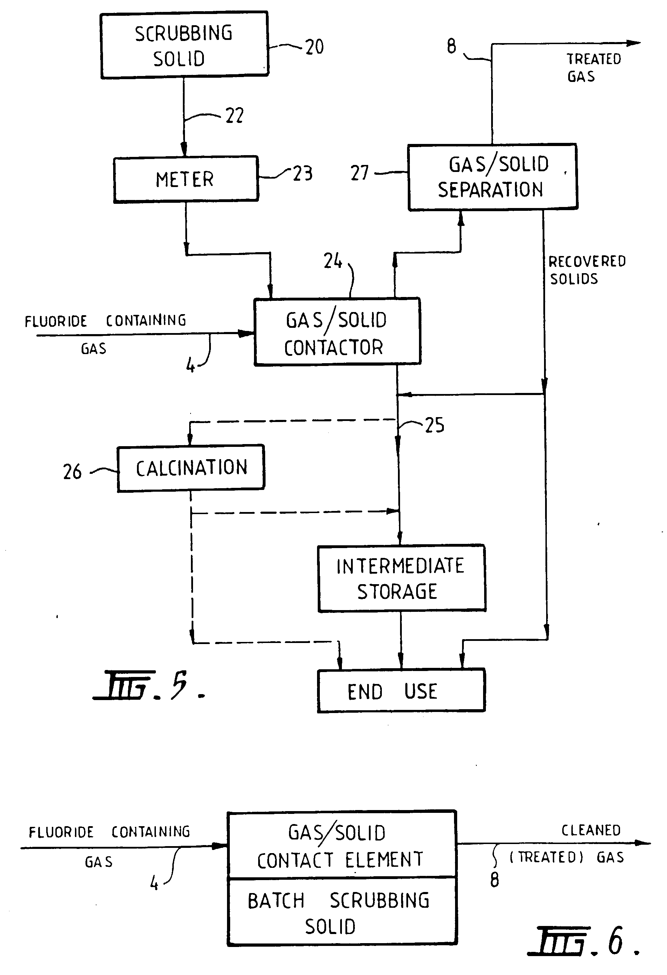

The degree to which the fluoride loading per unit mass of the solid particles is enhanced is clearly illustrated in Figure 3 as about 73% compared with about 4.5% for alumina in the best theoretical system.

The dosing of the alumina scrubbing particles with aluminium trihydrate containing particles prior to the scrubbing unit is a relatively low cost compromise for plants having existing dry scrubbing systems. The benefits, in terms of increased scrubbing capacity, as a function of the scrubbing medium composition are clearly illustrated in the graph of Figure 4 of the drawings. Even additions at the level of 1 to 2 mass percentage would have a significant impact on an existing dry scrubbing system.

In a total substitution system, the mass flow of solids into and around a system run exclusively on aluminium trihydrate could be reduced by a factor of about 38. Lower mass flows of solids reduce capital and maintenance costs. In addition, lower mass flows to resident bed gas/solid contactors translate directly to higher particle residence time which assists in achieving a high conversion.

In this case, because there is no need for alumina in the scrubbing plant, all the alumina allocation for the smelter would be available for the production of higher purity metal which can be sold at a premium. Separation of the recycled fluoride from the alumina should assist in control of the smelting process, removing uncertainties associated with the composition of secondary alumina and providing the option of adding alumina and aluminium fluoride independently.

Another consideration is the potential impact an aluminium trihydrate only system could have on impurity recycle. Because of its enhanced specific surface area (activation), alumina has a tendency to adsorb and hence recycle volatile impurities emitted from the pots. These impurities accumulate in the system and eventually exit in the metal product. Aluminium trihydrate has a lower specific surface area and should therefore be more selective in the recycling of fluorides.

Because the trihydrate/HF reaction can proceed at higher temperatures, the system may also have potential in the scrubbing of carbon bake exhausts. In addition to the other benefits, the ability to operate at elevated temperatures may permit simultaneous fluoride scrubbing and organic combustion.

Where the alumina trihydrate is primarily in its gibbsite crystalline form, the reactivity of the particles may be increased by partially calcining the gibbsite to increase its surface area. In one presently preferred embodiment, partially calcined gibbsite is prepared by soaking batches of gibbsite in a furnace held constant at 400°C. A period of calcination of around 8 hrs was found to be satisfactory, although this value has not been optimised and should be taken as an indicative maximum only. The required completeness of the calcination was confirmed by monitoring the mass loss on calcination, which was consistently around 30 wt%, consistent with the nature of the phase change. Partially calcining gibbsite at 400°C significantly increased the B.E.T. surface area from about 0.09 m$^2$/gm to about 271.23 m$^2$/gm, which had a positive impact on the extent of reaction with HF.

In a comparative trial to determine the fluoride loading capabilities of and to identify possible reaction mechanisms in the use of partially calcined gibbsite (PCG) a 2 gm sample of PCG was placed in a teflon coated fluidising tube. Challenge gas consisting of HF, H$_2$O and air in proportions similar to those found in practice (19697 µgm/l H$_2$O, 92 µgm/l HF, and balance air) was preheated to 80°C then introduced into the fluidising tube. Exhaust from the fluidising tube was passed through an impinger train to capture and measure HF. The amount of exhausted HF was quantified and monitored by an ion selective electrode immersed in the scrubbing solution.

Once breakthrough of HF was detected, the exposure was stopped and the solid sample removed for analysis. The fluoride content of the exposed solid was determined to be 78 mg HF/gm solid using standard analytical procedure and this result compared favourably with those calculated from the system mass balance: 105 mgHF/gm solid. The HF capacity of PCG compares favourably with that of smelter grade alumina (SGA) determined under the same conditions, 43 mg HF/gm solid clinical and 10 mg HF/gm solid practical. The additional capacity is due to the formation of ALF$_3$, in the PCG sample, which was confirmed by subsequent surface analysis techniques. Formation of aluminium fluoride requires three moles of HF for every mole of aluminium involved. This is significantly higher than the ratio associated with chemisorption, the mechanism associated with the SGA/HF system.

Using the data from this investigation, it was possible to estimate the composite HF capacity of a SGA/PCG blend as

$$\text{HF Capacity (mg HF/gm)} = 10 + 0.68x$$

where x = wt% PCG

The validity of the dosing approach as a means of improving HF capacity was investigated in a series of trials conducted in a dry scrubbing pilot plant. The pilot plant permitted the examination of the dry scrubbing process in a realistic pressure and temperature environment, using actual smelter exhaust gases. The plant consists of a reactor, where candidate solids can be exposed to smelter gases in a continuous yet controlled manner, and a gas solid separator to reclaim any entrained solids. The plant is supported by standard gas and solids analysis which monitors the plant over the test period.

To investigate the potential of PCG dosing, tests were conducted using PCG doses ranging from 0 to 2 wt% with the following results:

| Conditions used for pilot plant evaluation of PCG dosing concept | | | |
|---|---|---|---|
| Test ID | Target Solids Feedrate (kg/hr) | Target Gas Flowrate (Nm$^3$/hr) | % PCG in Feed (wt%) |
| 1 | 9.6 | 1740 | 0 |
| 2 | 9.6 | 1740 | ½ |
| 3 | 9.6 | 1740 | 1 |
| 4 | 9.6 | 1740 | 1½ |
| 5 | 9.6 | 1740 | 2 |
| 6 | 9.6 | 1740 | 0 |

In each case, the PCG was blended with the SGA prior to addition to the reactor feed system. Each test was run for five hours to obtain sufficient resolution of the gas and solid phase material balances.

Upon completion, the exposed solids were analyzed for fluoride content and the time weighted average concentrations of HF in the inlet and outlet gas streams were determined.

| Comparison of predicted and actual HF loading capacities of PCG | | |
|---|---|---|
| Test ID | Predicted HF Capacity (mg HF/gm) | Actual HF Capacity (mg HF/gm) |
| 1 | 10 | 10 |
| 2 | 10.3 | 11.0 |
| 3 | 10.7 | 10.6 |
| 4 | 11.0 | 11.0 |
| 5 | 11.4 | 11.2 |
| 6 | 10 | 10.7 |

As shown, there is generally good agreement between the predicted and actual performance of the composite, In addition to increasing the HF loading capacity, the addition of PCG also had a positive effect on HF in the exhaust as shown in the following data:

| Concentration of HF in exhaust gas at various PCG addition levels | |
|---|---|
| Test ID | Concentration of HF in Exhaust (mg HF/Nm$^3$) |
| 1 | 12.6* |
| 2 | 2.6 |
| 3 | 2.7 |
| 4 | 1.6 |
| 5 | 0.2 |
| 6 | 16.4* |

\* Calculated from mass balance

It can therefore be concluded that the addition of PCG to SGA used to dry scrub does have a positive effect on the performance of the scrubbing system.

To evaluate the potential of rehydrated smelter grade alumina (SGA) as a scrubbing medium, a trial involving SGA dosed with rehydrated material was conducted in the pilot plant referred to above.

Rehydrated SGA was prepared by mixing SGA with water at a mass ratio of 1.7 mass units SGA to 1 mass unit of water. To ensure complete mixing, the alumina was added to the water phase. At this mixing ratio there was a slight excess of free water on the surface, which formed a solid free veneer. The mixture was then placed in a oven held at 100°C until a constant mass was obtained, indicating the complete evaporation of the free water. Typically, this process was completed overnight.

The perceived advantages of rehydrating SGA with steam are:

- Accelerated crystal growth kinetics hence a larger population of smaller crystals. This should maximize the number of active sites per unit mass.
- Lower cost by avoiding the handling and higher energy costs associated with a drying stage.
- Conductive to continuous operation. A fluid bed type reactor fluidised with low pressure steam can be used (Fig. 1A).

The composite scrubbing material was then prepared by adding the rehydrated material to the SGA alumina at a mass % of 18.5 with a target feedrate of the composite of 9600 gms/hr at a target gas flowrate of 1740 Nm/hr. The test was run for five hours to allow resolution of the gas and solid phase material balances. Upon completion, the exposed solids were analyzed for fluoride content and the time weighted average concentrations of HF in the inlet and outlet gas streams were determined.

A comparison of predicted as actual results is given in the following Table:

| Comparison of predicted and actual HF loading capacities - rehydrated SGA | | | |
| --- | --- | --- | --- |
| Test ID | Predicted HF Capacity (based on equation 1) (mg HF/gm) | Actual HF Capacity (based on assay) (mg HF/gm) | HF in Exhaust Gas (mg HF/Nm$^3$) |
| 1 | 10 | 10 | 12.6 |
| 2 | 14.9 | 15 | <0.1 |

As indicated, there is good agreement between the predicted and actual performance of this composite material which substantiate the associated performance claims. It can therefore be concluded that the addition of rehydrated SGA to as-received SGA used to dry scrub HF does have a positive effect on the performance of the scrubbing system.

Installation of a rehydration step for SGA prior to the dry scrubbing process is likely to be much easier to implement in comparison to the addition of gibbsite. Smelters are usually supplied with alumina from an alumina refinery which is configured to high alumina throughput. Because such refineries cannot and are unlikely to supply the intermediate trihydrate phase, the smelter would need to purchase gibbsite from another supplier. This is likely to increase costs associated with procurement and cause complications relating to handling once on site. In addition, rehydrated alumina has essentially the same physical and behaviour properties as SGA, which will assist its performance in the scrubbing system by minimizing segregation during exposure.

A more detailed block diagram illustrating a continuous gas scrubbing system embodying the invention is illustrated in Figure 5 of the drawings.

The scrubbing solid 20 is introduced, by means of a feed conveyor 22, such as a belt conveyor, pneumatic transport, screw conveyor, air slide, vibrating conveyor, a bucket conveyor, an apron conveyor or a continuous flow conveyor, via a solids metering device 23, such as a rotary valve, a belt feeder, a screw feeder, a vibrating feeder or a weir/orifice, to a gas/solid contactor 24, such as a toroidal reactor of the type described in our copending International Patent Application WO 92/02289 a fluidised bed, a circulating fluidised bed, an injection/transport reactor, or a fast fluidised bed. The solids 20 are removed from the contactor 24 by means of a product removal conveyor 25 having any one of the alternative constructions described in relation to the conveyor 22.

If desired, the product is subjected to calcination at 26 by means of a toroidal reactor as defined above, a fluidised bed, a rotary kiln or a circulating fluidised bed. Calcination may be necessary where the aluminium fluoride and/or alumina product is to be introduced directly into an electrolytic cell. Calcination at temperatures of between about 700 to 800°C should satisfactorily remove all unwanted water from the product. The product may alternatively comprise a feedstock to a chemical process requiring aluminium fluoride and/or alumina. Alternatively, the product may be removed for disposal.

The separation of the gas and solid phases from the contactor 24 may be achieved at 27 by the use of a cyclone, an electrostatic precipitator, a bag filter, a wet scrubber, a granular bed, an impingement separator, a rotational flow centrifugal separator or a mechanical centrifugal separator.

In the batch system illustrated schematically in Figure 6 of the drawings, the scrubbing solid may comprise any of the materials defined above while the gas/solid contact element may comprise a fixed bed, a fluidised bed, a toroidal reactor of the type defined above, a circulating fluidised bed or a fast fluidised bed.

Utilization of trihydrate containing particles of surface rehydrated alumina in the process of scrubbing HF from exhaust gases has a number of advantages including:

**General Advantages**

Increased Scrubbing Capacity
Improved Scrubbing Action/Reduced HF Emissions at Source
Enhanced process Control
Higher Single Pass Fluoride Recover

**Specific Advantages - Partial Substitution**

Minimal Capital Cost to Implement

**Special Advantages - Total Substitution**

Maximum Primary (Virgin) Alumina Availability
Recovered Fluoride Available in a more Controlled Form
Minimal Solids Handling
Reduced volatile Impurity Recycle
Suitable for Scrubbing Carbon Bake Exhausts

**Increased Scrubbing Capacity**

Unlike the alumina/HF system, which involves chemisorption, when HF contacts an aluminium trihydrate molecule, a chemical reaction takes place. Because the reaction involves the entire particle, not just active surface sites, the fluoride loading per unit mass of solid is greatly enhances. Theoretically, aluminium trihydrate has 16 times the ideal fluoride adsorption capacity of alumina and 38 times the capacity realized in practice. The major implications of this are:

- the primary alumina required to satisfy the scrubbing duty can be significantly reduced and in the case of full substitution, negated altogether.
- the ability to "engineer" the fluoride removal capacity of the scrubbing system to meet current and future demands.

A major aim of dry scrubbing is to recover gaseous fluorides in a useable form. Studies of the alumina/HF system suggest that fluorides chemisorbed under practical conditions (in the presence of atmospheric moisture) are not present as aluminium fluoride but instead form hydroxy/HF complexes. These complexes are less thermally stable and have been found to desorb at relatively low temperatures (200-500°C). This characteristic may have significant implications in a number of areas including:

- Bath Chemistry : Although the fluorides are being recycled, they could be desorbing without even entering the bath and therefore not be having the desired effect on bath chemistry and causing an artificially high demand for fluoride additions. If this is the case, the real value of alumina based dry scrubbing must be questioned.
- Gaseous fluoride Loadings : Desorbed fluoride could be making a significant contribution to the overall fluoride loading of the system. hence the system could be self perpetuating with respect to fluoride loading

$$\text{more HF} \rightarrow \text{more recycle} \rightarrow \text{more HF ......}$$

In contrast, the aluminium trifluoride product from the HF/aluminium trihydrate system can only evolve HF following hydrolysis, which does not occur to any great extent within the electrolytic cell.

The high chemical affinity between aluminium trihydrate and HF is expected to improve the rate of fluoride removal per pass of solids through the system. In addition the mass flow of solids required to achieve the specified fluoride removal rate could be reduced. In gas/solid contactors with a resident bed of particles (fluid bed, torbed), this translates to higher particle residence times thus better single pass conversion. the combined effect of these actions should negate the need for solids recycle.

Elimination of solids recycle, which can be as high as 20 on alumina-only systems, is desirable for a number of reasons including :

- more direct relationships between HF removal and feedrate thus improved process control
- less attrition of the scrubbing solid. Particle size distribution imparts on materials handling solubility and the quality of the work place environment.
- lower solids loading to the baghouse.
- elimination of stream splitting and metering devices which tend to become blocked during service.

In addition to making the relationship between solids feedrate and fluoride removal more predictable (through reduced recycle), the use of aluminium trihydrate containing surface rehydrated alumina particles will improve system control by reducing the system's sensitivity to external factors. Alumina-only systems can experience performance variations when external elements change. Humidity in particular has been found to influence the chemisorption mechanism.

Because the process involves a chemical reaction rather than chemisorption, the aluminium trihydrate/HF system is expected to be much less vulnerable to these external influences. In fact, humidity is a consequence of the aluminium trihydrate/HF reaction but does not hinder the performance of commercial processes.

## Claims

1. A method of dry scrubbing process exhaust gases containing fluorides, comprising the steps of bringing the fluoride containing gas into contact with particles of surface rehydrated alumina to cause the fluoride in the gas to react chemically with aluminium hydroxide present on the surfaces of said particles to form fluoride containing particles, and collecting the fluoride containing particles.

2. The method of claim 1, in which the fluroide containing gas is reacted with surface rehydrated alumina alone or in combination with smelter grade alumina.

3. The method of claim 1 or 2, wherein the surface rehydrated alumina is prepared by the steps of combining particles of smelter grade alumina with water, and then drying the particles to produce surface rehydrated smelter grade alumina having a surface activated with bayerite supported on an alumina substrate.

4. The method of claim 3, wherein the smelter grade alumina is rehydrated at 0.5 to 5% by weight.

5. The method of claim 3 or 4, wherein the surface of the smelter grade alumina particles support bayerite crystals at a rehydration level of about 2.3% by weight.

6. Rehydrated alumina comprising smelter grade alumina particles which has been subjected to rehydration at a level between 0.5 to 5% by weight to rehydrate only the surfaces of the particles.

7. Rehydrated alumina according to claim 6, wherein the surfaces of the particles support bayerite crystals at a rehydration level of about 2.3% by weight.

8. A system for dry scrubbing process exhaust gases containing fluorides, comprising: means to carry out surface rehydration of alumina particles; means to convey the fluoride containing gases and the surface rehydrated alumina particles to a reaction zone; means to contact said gases and said particles to cause a chemical reaction between the particles and the fluoride component of the gas to form particles containing a stable fluoride; and means to collect said particles containing a stable fluoride for subsequent use.

9. A system according to claim 8, wherein the means to carry out surface rehydration of alumina particles comprises: means to wet particles of smelter grade alumina and means to dry said particles to obtain surface rehydrated particles having a rehydration level of 0.5 to 5% by weight.

## Patentansprüche

1. Trocken-Auswasch-Verfahren zur Behandlung von Abgasen, die Fluoride enthalten, mit folgenden Schritten:

   in Kontakt-Bringen des das Fluorid enthaltenden Gases mit Oberflächenrehydratisierten Aluminiumoxid-Partikeln, um das Fluorid im Gas zu veranlassen, mit auf den Oberflächen der Partikel vorhandenem Aluminiumhydroxid chemisch zu reagieren, um Fluorid enthaltende Partikel zu bilden; und

Ansammeln der das Fluorid enthaltenden Partikel.

2. Verfahren nach Anspruch 1, bei dem das das Fluorid enthaltende Gas mit Oberflächen-rehydratisiertem Aluminiumoxid allein oder in Kombination mit Schmelzqualität-Aluminiumoxid reagieren gelassen wird.

3. Verfahren nach Anspruch 1 oder 2, dadurch gekennzeichnet, daß das Oberflächenrehydratisierte Aluminiumoxid vorbereitet wird durch die Schritte:

Kombinieren von Schmelzqualität-Aluminiumoxid-Partikeln mit Wasser und dann

Trocknen der Partikel, um Oberflächen-rehydratisiertes Schmelzqualität-Aluminiumoxid zu erzeugen, das eine mit auf einem Aluminiumoxid-Substrat getragenen Bayerit aktivierte Oberfläche aufweist.

4. Verfahren nach Anspruch 3, dadurch gekennzeichnet, daß das Schmelzqualität-Aluminiumoxid zu 0,5 bis 5 Gewichtsprozent rehydratisiert ist.

5. Verfahren nach Anspruch 3 oder 4, dadurch gekennzeichnet, daß die Oberfläche der Schmelzqualität-Aluminiumoxid-Partikel Bayerit-Kristalle mit einem Rehydratisierungsgrad von ungefähr 2,3 Gewichtsprozent trägt.

6. Rehydratisiertes Aluminiumoxid, das Schmelzqualität-Aluminiumoxid-Partikel enthält, die der Rehydratisierung bis zu einem Grad zwischen 0,5 bis 5 Gewichtsprozent unterworfen worden sind, um nur die Oberflächen der Partikel zu rehydratisieren.

7. Rehydratisiertes Aluminiumoxid nach Anspruch 6, dadurch gekennzeichnet, daß die Oberflächen der Partikel Bayerit-Kristalle mit einem Rehydratisierungsgrad von ungefähr 2,3 Gewichtsprozent tragen.

8. System für ein Trocken-Auswasch-Verfahren für Abgase, die Fluoride enthalten, aufweisend:

ein Mittel, um die Oberflächen-Rehydratisierung der Aluminiumoxid-Partikel auszuführen;

ein Mittel, um die das Fluorid enthaltenden Gase und die Oberflächen-rehydratisierten Aluminiumoxid-Partikel zu einer Reaktionszone zu fördern;

ein Mittel, das die Gase und die Partikel in Kontakt bringt, um eine chemische Reaktion zwischen den Partikeln und der Fluorid-Komponente des Gases zu veranlassen, um Partikel zu bilden, die ein beständiges Fluorid enthalten; und

ein Mittel, um die ein beständiges Fluorid enthaltenden Partikel für nachfolgenden Gebrauch zu sammeln.

9. System nach Anspruch 8, dadurch gekennzeichnet, daß das Mittel zur Ausführung der Oberflächen-Rehydratisierung der Aluminiumoxid-Partikel aufweist:

ein Mittel, um die Partikel aus Schmelzqualität-Aluminiumoxid anzufeuchten und

ein Mittel, um die Partikel zu trocknen, um Oberflächen-rehydratisierte-Partikel zu erhalten, die ein Rehydratisierungsgrad von 0,5 bis 5 Gewichtsprozent aufweisen.

**Revendications**

1. Procédé d'épuration à sec de gaz d'échappement contenant des fluorures, comprenant les étapes consistant à mettre le gaz contenant du fluorure en contact avec des particules d'alumine réhydratée en surface dans le but de provoquer une réaction chimique entre le fluorure présent dans le gaz et l'hydroxyde d'aluminium présent sur la surface desdites particules de manière à former des particules contenant du fluorure, et à recueillir les particules contenant du fluorure.

**2.** Procédé selon la revendication 1, dans lequel le gaz contenant du fluorure est mis à réagir avec de l'alumine réhydratée en surface seule ou en combinaison avec une alumine de fonderie.

**3.** Procédé selon la revendication 1 ou 2, dans lequel l'alumine réhydratée en surface est préparée selon les étapes consistant à combiner des particules d'alumine de fonderie avec de l'eau, puis à sécher les particules pour produire de l'alumine de fonderie réhydratée en surface ayant une surface activée par de la bayerite présente sur un substrat d'alumine.

**4.** Procédé selon la revendication 3, dans lequel l'alumine de fonderie est réhydratée à hauteur de 0,5 à 5% en poids.

**5.** Procédé selon la revendication 3 ou 4, dans lequel la surface des particules d'alumine de fonderie supporte des cristaux de bayerite à un niveau de réhydratation d'environ 2,3% en poids.

**6.** Alumine réhydratée comprenant des particules d'alumine de fonderie qui a été soumise à une réhydratation à un niveau compris entre 0,5 et 5% en poids de manière à réhydrater uniquement la surface des particules.

**7.** Alumine réhydratée selon la revendication 6, dans laquelle les surfaces des particules supportent des cristaux de bayerite à un niveau de réhydratation d'environ 2,3% en poids.

**8.** Système d'épuration à sec de gaz d'échappement contenant des fluorures, comprenant : un moyen permettant de réaliser une réhydratation en surface des particules d'alumine ; un moyen permettant de transporter les gaz contenant du fluorure et les particules d'alumine réhydratées en surface jusque dans une zone réactionnelle ; un moyen permettant de mettre en contact lesdits gaz et lesdites particules afin de provoquer une réaction chimique entre les particules et le constituant fluoré du gaz de manière à former des particules contenant un fluorure stable ; et un moyen permettant de recueillir lesdites particules contenant un fluorure stable en vue d'une utilisation ultérieure.

**9.** Système selon la revendication 8, dans lequel le moyen permettant de réaliser la réhydratation en surface des particules d'alumine comprend : un moyen permettant de mouiller les particules d'alumine de fonderie et un moyen permettant de sécher lesdites particules afin d'obtenir des particules réhydratées en surface ayant un niveau de réhydratation compris entre 0,5 et 5% en poids.

EP 0 562 059 B1

## FIG. 1.

REHYDRATED SGA — 1

PRIMARY ALUMINA — 2

3 → GAS/SOLID CONTACTOR

5

6 → BAGFILTER → 8 → SCRUBBED EXHAUST

4 → RAW POT EXHAUST

RECYCLE — 7

SECONDARY ALUMINA

## FIG. 1A.

ALUMINA — 2

2 → ALUMINA → REHYDRATION FLUID BED — 9

11 → BLENDING — 12

13 → GAS/SOLID CONTACTOR — 3

5 → BAGFILTER — 6 8 → SCRUBBED EXHAUST

10 → LOW PRESSURE STEAM

4 → RAW POT EXHAUST

7

## FIG. 2.

PRIMARY ALUMINA

REHYDRATED SGA → GAS/SOLID CONTACTOR — 3

5 → BAGFILTER → 8 → SCRUBBED EXHAUST

6

4 → RAW POT EXHAUST

14 → ALUMINIUM FLUORIDE

FIG. 3.

Legend:
- THEORETICAL Al$_2$O$_3$
- "PRACTICAL" Al$_2$O$_3$
- Al(OH)$_3$

FIG. 4.

SCRUBBING MEDIUM COMPOSITION (%)
(wt % Al(OH)$_3$ — Balance Al$_2$O$_3$)

EP 0 562 059 B1

SCRUBBING SOLID — 20

↓ 22

METER — 23

FLUORIDE CONTAINING GAS → 4

GAS/SOLID CONTACTOR — 24

27 — GAS/SOLID SEPARATION

8 → TREATED GAS

RECOVERED SOLIDS

26 — CALCINATION — 25

INTERMEDIATE STORAGE

END USE

*Fig. 5.*

FLUORIDE CONTAINING GAS → 4

GAS/SOLID CONTACT ELEMENT

BATCH SCRUBBING SOLID

CLEANED (TREATED) GAS 8 →

*Fig. 6.*